# EUROPEAN PATENT APPLICATION

(11) **EP 4 632 202 A1**
(43) Date of publication of application: **15.10.2025**
(21) Application number: 25169465.9
(22) Date of filing: 09.04.2025
(51) Int. Cl.: F02C 3/22, F02C 7/224, F02C 7/236

(54) **HYDROGEN SUPPLY SYSTEM FOR AN AIRCRAFT ENGINE WITH A TURBO-PUMP AND A LOW-PRESSURE BURNER**

(30) Priority: 12.04.2024 US 202463633288 P
(71) Applicant: Airbus Operations (S.A.S.), 31060 Toulouse Cedex 9 (FR)
(72) Inventor: BELLEVILLE, Mathieu, 31060 TOULOUSE (FR)
(74) Representative: Cabinet Le Guen Maillet

(57) **Abstract**

A hydrogen supply system for providing gaseous hydrogen to an engine from a tank of liquid hydrogen.

## Description

### FIELD OF THE INVENTION

The invention relates to a hydrogen supply system for an aircraft and an aircraft comprising such supply system and a hydrogen powered gas turbine engine.

### BACKGROUND

It has been suggested that aircraft may utilize hydrogen for powering gas turbine engines. It is contemplated that any future hydrogen aircraft, powered by gas turbine engines burning hydrogen, will have, for weight reasons, to carry hydrogen in liquid form, therefore cryogenic, at moderate pressure (less than 10 bars). Hydrogen will be stored in a cryogenic tank onboard the aircraft.

The operation of the gas turbine engine, for its part, requires gaseous hydrogen, at a temperature close to ambient, and above all at a sufficient pressure, i.e., 35 to 100 bars depending on the gas turbine engine and its injection technology. Therefore, there is a need to compress and heat hydrogen on demand.

For this purpose, a known solution consists in using an air type turbo-pump for compressing hydrogen coming from the cryogenic tank and a heat exchanger for reheating hydrogen by heat exchange in the primary nozzle of the gas turbine engine. Hydrogen is then reheated by heat recovery on the nozzle of the gas turbine engine. Reheating solutions by heat recovery in the gas turbine nozzle encounter the following difficulties:
- Transport of heat from the nozzle to the hydrogen heater;
- Low temperatures, limiting system efficiency; and,
- A dependence on the engine in operation, which may require an alternative heating device for starting.

A staged combustion reheating solution could be foreseen, where a small amount of hydrogen is burned thanks to a supply of air (combustion in excess of hydrogen). However, this combustion is done directly on the hydrogen flow going toward the gas turbine engine. So, to permit air to be blended with hydrogen to permit the combustion, it would require the air to be supplied at a high pressure, corresponding to the pressure at the output of the compressor of the turbopump, much greater than the pressure of injection into the gas turbine engine, which represents a major technical difficulty.

### SUMMARY OF THE INVENTION

An object of the present invention is to propose a hydrogen supply system for supplying gaseous hydrogen to a turbine engine of an aircraft.

For this purpose, is proposed a hydrogen supply system for supplying gaseous hydrogen to a turbine engine of an aircraft, the hydrogen supply system comprising:
- a first pump intended to receive liquid hydrogen from a liquid hydrogen tank of the aircraft and produce a pressurized liquid hydrogen;
- a second pump configured to receive the pressurized liquid hydrogen from the first pump and produce a highly pressurized liquid hydrogen;
- a heat exchanger configured to receive, at a first input port, the highly pressurized liquid hydrogen from the second pump and provide, at a first output port, a gaseous heated pressurized hydrogen;
- a turbine configured to receive, at an input port, the gaseous heated pressurized hydrogen from the first output port of the heat exchanger and to provide, at an output port, gaseous hydrogen, wherein the turbine provides mechanical energy to the second pump to make it run;
- an output pipe having a first end fluidly connected to the output port of the turbine and to the first output port of the heat exchanger and a second end intended to be fluidly connected to the turbine engine,
- a combustion chamber comprising a first input port intended to receive air at a pressure close to ambient, a second input port fluidly connected to the output port of the turbine and to the first output port of the heat exchanger, and an output port fluidly connected to a second input port of the heat exchanger,
- a first valve arranged to control the quantity of gaseous heated pressurized hydrogen entering in the input port of the turbine,
- a second valve arranged to control the quantity of gaseous heated pressurized hydrogen entering in the second input port of the combustion chamber, and
- a control unit arranged to control the opening and the closing of each valve.

The combustion chamber providing heat to the heat exchanger for reheating hydrogen outputted from the second pump.

### DETAILED DESCRIPTION OF THE DRAWINGS

Embodiments of the invention are described in more detail with reference to the accompanying schematic drawings that are listed below:
Fig. 1 depicts an aircraft according to the invention, and
Fig 2 schematically depicts a hydrogen supply system according to the invention.

### DETAILED DESCRIPTION

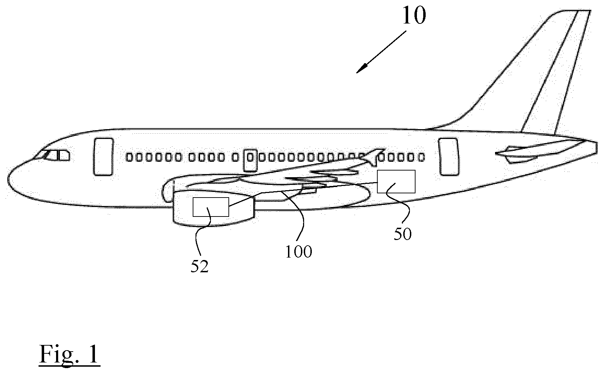

Fig 1 depicts an aircraft 10 comprising a liquid hydrogen tank 50 containing hydrogen under liquid phase and for example at a pressure less than 10 bars. The aircraft 10 comprises also a turbine engine 52 requiring gaseous hydrogen to work, especially at an ambient temperature and at a sufficient pressure from about 35 bars to 100 bars. Between the tank 50 and the turbine engine 52, the aircraft 10 comprises a hydrogen supply system 100 according to the invention.

The turbine engine 52 is a gas turbine in which hydrogen is burned into an internal combustion chamber.

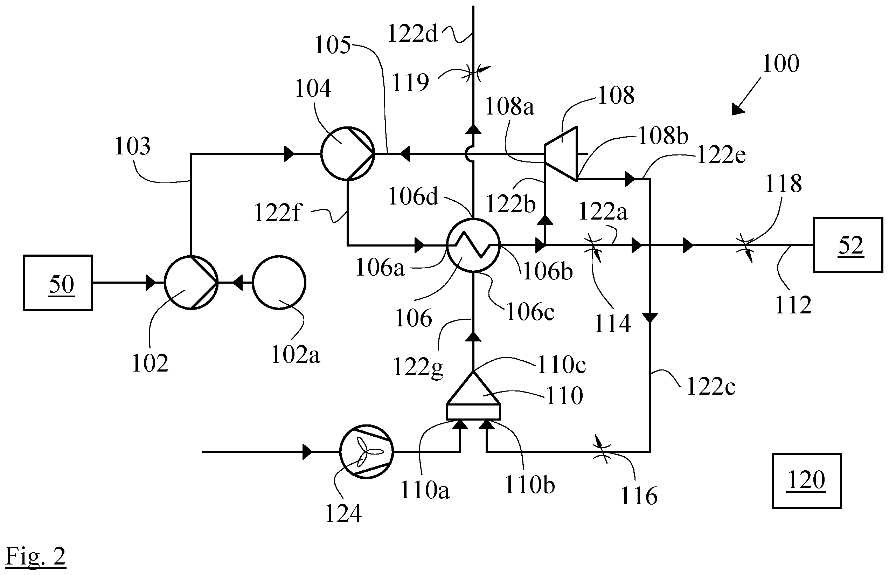

Fig 2 depicts the hydrogen supply system 100.

The hydrogen supply system 100 comprises a first pump 102 which is here an electrically actuated pump actioned by an electrical motor 102a. The first pump 102 receives liquid hydrogen from the liquid hydrogen tank 50 and produces a pressurized liquid hydrogen, in other words, the first pump 102 carries out a first pressurization of the liquid hydrogen.

The hydrogen supply system 100 comprises a second pump 104 which is a turbo-pump as explained below, it means that it is driven by a turbine 108. The second pump 104 receives the pressurized liquid hydrogen from the first pump 102 and produces a highly pressurized liquid hydrogen. At this end an alimentation pipe 103 is arranged between the first pump 102 and the second pump 104.

Once compressed, the liquid hydrogen is passed through a heat exchanger 106 of the hydrogen supply system 100. In the heat exchanger 106, the liquid hydrogen will gain energy and become gaseous. At this end, the heat exchanger 106 receives, at a first input port 106a, the highly pressurized liquid hydrogen from the second pump 104 and provides, at a first output port 106b, a gaseous heated pressurized hydrogen. At the same time, as explained below, hot air crosses the heat exchanger 106 to heat the hydrogen. At this end, the heat exchanger 106 comprises a second input port 106c to introduce the hot air and a second output port 106d through which the air coming from the second input port 106c is evacuated from the heat exchanger 106.

From the first output port 106b of the heat exchanger 106, the heated hydrogen is passed to the turbine 108. At this end, the turbine 108 receives, at an input port 108a, the gaseous heated pressurized hydrogen from the first output port 106b of the heat exchanger 106 and provides, at an output port 108b, gaseous hydrogen.

The expansion of the hydrogen gives the power necessary to power the second pump 104 thanks to mechanical energy provided by the turbine 108 to the second pump 104. At this end, an axle 105 is fixed between the mobile parts of the turbine 108 and the mobile parts of the second pump 104.

With the expansion, the hydrogen will lose pressure and heat.

The hydrogen supply system 100 comprises also an output pipe 112 having a first end fluidly connected to the output port 108b of the turbine 108 and to the first output port 106b of the heat exchanger 106 and a second end fluidly connected to the turbine engine 52 of the aircraft 10.

The hydrogen supply system 100 comprises also a combustion chamber 110 comprising a first input port 110a receiving air at a pressure close to ambient, a second input port 110b fluidly connected to the output port 108b of the turbine 108 and to the first output port 106b of the heat exchanger 106, and an output port 110c fluidly connected to the second input 106c of the heat exchanger 106 to heat the hydrogen. A pipe called "seventh pipe" 122g is arranged between the output port 110c of the combustion chamber 110 and the second input 106c of the heat exchanger 106.

The hydrogen supply system 100 comprises also a first valve 114 arranged to control the quantity of gaseous heated pressurized hydrogen entering in the input port 108a of the turbine 108.

The hydrogen supply system 100 comprises also a second valve 116 arranged to control the quantity of gaseous heated pressurized hydrogen entering in the second input port 110b of the combustion chamber 110.

The hydrogen supply system 100 comprises also a control unit 120 arranged to control the opening and the closing of each valve 114, 116 according to the needs of the aircraft 10.

The present invention provides a solution with a combustion chamber 110 configured to receive a portion of the gaseous hydrogen outputted from the second pump 104 and to receive air at a pressure close to ambient, the combustion chamber 110 providing heat to the heat exchanger 106 for reheating hydrogen outputted from the second pump 104.

The proposed solution provides a local heat source, controllable independently of the propulsion, easy to start and stop. Additionally, by operating at atmospheric pressure, the air supply becomes simple: a simple air intake, possibly supplemented by a fan as described below, is sufficient. The association with a turbopump provides reliability and less electricity consumption than the exclusive use of electric pumps. In the embodiment represented on Fig. 2, the hydrogen supply system 100 comprises a first pipe 122a fluidly connected between the first output port 106b of the heat exchanger 106 and the output pipe 112, a second pipe 122b fluidly connected between the first pipe 122a and the input port 108a of the turbine 108 and a third pipe 122c fluidly connected between the first pipe 122a and the second input port 110b of the combustion chamber 110. In this embodiment, the connection of the third pipe 122c with the first pipe 122a is called "first connection" and is downstream of the connection of the second pipe 122b with the first pipe 122a which is called "second connection". The downstream direction is in relation to the flow of hydrogen in the first pipe 122a, flowing from the heat exchanger 106 to the turbine engine 52.

In this embodiment, the first valve 114 is arranged between the first and the second connections on the first pipe 122a. The first valve 114 allows all or part of the hydrogen to be diverted from the turbine 108 to control the speed of the second pump 104 and prevent the risk of overspeed.

A fifth pipe 122e is arranged between the output port 108b of the turbine 108 and the first pipe 122a.

In another embodiment, not represented, the first valve 114 is arranged on the second pipe 122b.

The second valve 116 is arranged on the third pipe 122c between the first connection and the second input port 110b of the combustion chamber 110. A small fraction of the hydrogen passing in the first pipe 122a to be directed to the turbine engine 52 is diverted to the second input port 110b of the combustion chamber 110, or burner, to be burned with air at atmospheric pressure coming from the first input port 110a of the combustion chamber 110, to provide heat to the heat exchanger 106. The second valve 116 can be a calibrated hole and controls the quantity of hydrogen delivered to the combustion chamber 110.

In the embodiment, the hydrogen supply system 100 comprises a third valve 118 controlled by the control unit 120 and arranged on the output pipe 112 to control the hydrogen flowing to the turbine engine 52. The third valve 118 is for example a flow metering valve (FMV) and most of the hydrogen is directed to it, then to the injection device of the turbine engine 52 so as to provide the hydrogen necessary for powering the turbine engine 52. The interaction between the turbopump and the third valve 118 simplifies the control of the turbopump.

The hydrogen supply system 100 comprises also a fourth pipe 122d with a first end fluidly connected to the second output port 106d of the heat exchanger 106 to evacuate the air coming from the second input port 106c of the heat exchanger 106. In this embodiment, a second end of the fourth pipe 122d directs air outward.

A fourth valve 119 controlled by the control unit 120 is arranged on the fourth pipe 122d. The fourth valve 119, controls, by controlling the general flow rate, the temperature in the combustion chamber 110.

A discharge valve can be installed between the second pump 104 and the heat exchanger 106 as a protection means against overpressure. It means that the discharge valve is arranged on a sixth pipe 122f arranged between the second pump 104 and the first input port 106a of the heat exchanger 106.

A fan 124 may be included to ensure the air supply when the speed of the aircraft 10 and/or flow of ambient air is insufficient. The fan 124 is in a line for supplying the air to the first input port 110a of the combustion chamber 110.

The control unit described herein may include a controller or a computing device comprising a processing and a memory which has stored therein computer-executable instructions for implementing the processes described herein. The control unit may comprise any suitable devices configured to cause a series of steps to be performed so as to implement the method such that instructions, when executed by the computing device or other programmable apparatus, may cause the functions/acts/steps specified in the methods described herein to be executed. The control unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory may be any suitable known or other machine-readable storage medium. The memory may comprise non-transitory computer readable storage medium such as, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to the device such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. The memory may comprise any storage means (e.g., devices) suitable for retrievably storing the computer-executable instructions executable by control unit. The methods and systems described herein may be implemented in a high-level procedural or object-oriented programming or scripting language, or a combination thereof, to communicate with or assist in the operation of the controller or computing device. Alternatively, the methods and systems described herein may be implemented in assembly or machine language. The language may be a compiled or interpreted language. Program code for implementing the methods and systems described herein may be stored on the storage media or the device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein.

Computer-executable instructions may be in many forms, including modules, executed by one or more computers or other devices. Generally, modules include routines, programs, objects, components, data structures, etc., that perform particular tasks or implement particular abstract data types. Typically, the functionality of the modules may be combined or distributed as desired in various embodiments.

It will be appreciated that the systems and devices and components thereof may utilize communication through any of various network protocols such as TCP/IP, Ethernet, FTP, HTTP and the like, and/or through various wireless communication technologies such as GSM, CDMA, Wi-Fi, and WiMAX, is and the various computing devices described herein may be configured to communicate using any of these network protocols or technologies.

## Claims

1. Hydrogen supply system (100) for supplying gaseous hydrogen to a turbine engine (52) of an aircraft (10), the hydrogen supply system (100) comprising:
- a first pump (102) intended to receive liquid hydrogen from a liquid hydrogen tank (50) of the aircraft (10) and produce a pressurized liquid hydrogen;
- a second pump (104) configured to receive the pressurized liquid hydrogen from the first pump (102) and produce a highly pressurized liquid hydrogen;
- a heat exchanger (106) configured to receive, at a first input port (106a), the highly pressurized liquid hydrogen from the second pump (104) and provide, at a first output port (106b), a gaseous heated pressurized hydrogen;
- a turbine (108) configured to receive, at an input port (108a), the gaseous heated pressurized hydrogen from the first output port (106b) of the heat exchanger (106) and to provide, at an output port (108b), gaseous hydrogen, wherein the turbine (108) provides mechanical energy to the second pump (104) to make it run;
- an output pipe (112) having a first end fluidly connected to the output port (108b) of the turbine (108) and to the first output port (106b) of the heat exchanger (106) and a second end intended to be fluidly connected to the turbine engine (52),
- a combustion chamber (110) comprising a first input port (110a) intended to receive air at a pressure close to ambient, a second input port (110b) fluidly connected to the output port (108b) of the turbine (108) and to the first output port (106b) of the heat exchanger (106), and an output port (110c) fluidly connected to a second input port (106c) of the heat exchanger (106),
- a first valve (114) arranged to control the quantity of gaseous heated pressurized hydrogen entering in the input port (108a) of the turbine (108),
- a second valve (116) arranged to control the quantity of gaseous heated pressurized hydrogen entering in the second input port (110b) of the combustion chamber (110), and
- a control unit (120) arranged to control the opening and the closing of each valve (114, 116).

2. Hydrogen supply system (100) according to claim 1, wherein it further comprises a first pipe (122a) fluidly connected between the first output port (106b) of the heat exchanger (106) and the output pipe (112), a second pipe (122b) fluidly connected between the first pipe (122a) and the input port (108a) of the turbine (108), a third pipe (122c) fluidly connected between the first pipe (122a) and the second input port (110b) of the combustion chamber (110), wherein a first connection of the third pipe (122c) with the first pipe (122a) is downstream of a second connection of the second pipe (122b) with the first pipe (122a), and wherein the first valve (114) is arranged between the first and the second connections.

3. Hydrogen supply system (100) according to claim 3, wherein the second valve (116) is arranged between the first connection and the second input port (110b) of the combustion chamber (110).

4. Hydrogen supply system (100) according to claim 2 or 3, wherein a third valve (118) controlled by the control unit (120) is arranged on the output pipe (112).

5. Hydrogen supply system (100) according to any one of claims 1 to 4, wherein it comprises a fourth pipe (122d) with a first end fluidly connected to a second output port (106d) of the heat exchanger (106) to evacuate the air coming from the second input port (106c) of the heat exchanger (106).

6. Hydrogen supply system (100) according to claim 5, wherein a second end of the fourth pipe (122d) directs air outward.

7. Hydrogen supply system (100) according to any one of claim 5 or 6, wherein a fourth valve (119) controlled by the control unit (120) is arranged on the fourth pipe (122d).

8. Hydrogen supply system (100) according to any one of claims 1 to 7, wherein it further comprises a fan (124) in a line for supplying the air to the first input port (110a) of the combustion chamber (110).

9. Aircraft (10) comprising a liquid hydrogen tank (50), a turbine engine (52) and a hydrogen supply system (100) according to any one of claims 1 to 8, wherein the first pump (102) receives liquid hydrogen from the liquid hydrogen tank (50) and wherein the second end of the output pipe (112) is fluidly connected to the turbine engine (52).
